(19) Europäisches Patentamt
European Patent Office
Office européen des brevets

(11) **EP 4 245 799 A1**

(12) **EUROPEAN PATENT APPLICATION**
published in accordance with Art. 153(4) EPC

(43) Date of publication:
**20.09.2023 Bulletin 2023/38**

(21) Application number: **21892072.6**

(22) Date of filing: **06.07.2021**

(51) International Patent Classification (IPC):
*C08J 7/048* (2020.01)    *C08J 5/18* (2006.01)
*C08L 67/02* (2006.01)    *C08L 67/04* (2006.01)
*C08L 1/02* (2006.01)    *B29C 48/08* (2019.01)

(52) Cooperative Patent Classification (CPC):
**B29C 48/08; C08J 5/18; C08J 7/048; C08L 1/02;
C08L 67/02; C08L 67/04;** Y02W 90/10

(86) International application number:
**PCT/KR2021/008553**

(87) International publication number:
**WO 2022/102902 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.11.2020 KR 20200149833**

(71) Applicant: **Ecovance Co. Ltd
Suwon-si, Gyeonggi-do 16338 (KR)**

(72) Inventors:
• **KIM, Kyung Youn
Suwon-si, Gyeonggi-do 16338 (KR)**
• **KIM, Hyung Mo
Suwon-si, Gyeonggi-do 16338 (KR)**
• **KIM, Seong Dong
Suwon-si, Gyeonggi-do 16338 (KR)**
• **KIM, Hoon
Suwon-si, Gyeonggi-do 16338 (KR)**

(74) Representative: **Dehns
St. Bride's House
10 Salisbury Square
London EC4Y 8JD (GB)**

(54) **BIODEGRADABLE LAMINATED FILM AND METHOD FOR MANUFACTURING SAME**

(57) An embodiment of the present invention relates to a biodegradable laminated film capable of improving all of biodegradability, durability, and barrier properties, and to a method for manufacturing the biodegradable laminated film. The laminated film comprises: a substrate layer formed from a biodegradable resin composition; and a barrier layer positioned on at least one side of the substrate layer and formed from a coating composition, wherein the barrier layer includes nanocellulose, and thus has improved barrier properties, such as oxygen permeability and moisture permeability, without a reduction in mechanical properties such as tensile strength and tear strength. Therefore, the biodegradable laminated film according to the embodiment can exhibit excellent properties when used in various fields in which barrier properties are important, such as packaging materials for refrigerated and frozen foods, packaging materials for electronic materials, and medical fluid bags.

[Fig. 1]

1

**Description**

**Technical Field**

Embodiments relate to a biodegradable laminated film and a process for preparing the same.

**Background Art**

In recent years, as concerns about environmental issues have increased, there is a need for a solution for dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to completely decompose naturally.

In order to overcome the limitations of these polymers, studies on biodegradable polymers that can be decomposed in a much faster time are being actively conducted. Although polylactic acid (PLA), polybutyleneadipate terephthalate (PBAT), polybutylene succinate (PBS), and the like are used as biodegradable polymers, their uses are limited due to poor mechanical properties such as tensile strength and tear strength. In particular, it is difficult to apply them to a packaging material due to their low barrier properties.

In order to overcome these limitations in physical properties, biodegradable polymers are blended, or additives such as impact strength enhancers and chain extenders are used. However, the degree of enhancements in physical properties through these measures is not significant, and these additives are not biodegradable and may reduce the transparency of products prepared using them. In addition, there is also a method of enhancing barrier properties by coating one side of a biodegradable film with polyvinylidene chloride (PVDC) or ethylene vinyl alcohol (EVOH). However, PVDC has issues of environmental hormones, and EVOH has very low biodegradability and may cause defects such as fish eyes. Accordingly, there is a demand for research on biodegradable polymers that have excellent barrier properties without deteriorating biodegradability, mechanical properties such as tensile strength and tear strength, transparency, and the like, whereby they can be applied to more diverse fields.

As an example, Korean Laid-open Patent Publication No. 2012-0103158 discloses a biodegradable plastic composition having improved durability in which polypropylene carbonate (PPC) is blended with a composition comprising PLA, PBS, or the like. However, the method based on such blending has limitations in enhancing durability or the like.

[Prior Art Document]

[Patent Document]

(Patent Document 1) Korean Laid-open Patent Publication No. 2012-0103158

**Disclosure of Invention**

**Technical Problem**

Accordingly, the embodiments aim to provide a biodegradable laminated film having excellent processability and productivity, especially excellent barrier properties, without deteriorating biodegradability or mechanical properties such as tensile strength and tear strength, and a process for preparing the same.

**Solution to Problem**

The biodegradable laminated film according to an embodiment comprises a base layer formed from a biodegradable resin composition; and a barrier layer located on at least one side of the base layer and formed from a coating composition, wherein the coating composition comprises nanocellulose.

The process for preparing a biodegradable laminated film according to another embodiment comprises preparing a base layer from a biodegradable resin composition; and forming a barrier layer from a coating composition on at least one side of the base layer, wherein the coating composition comprises nanocellulose.

**Advantageous Effects of Invention**

The biodegradable laminated film according to the embodiment comprises a barrier layer formed from a coating composition containing nanocellulose on at least one side of a base layer, whereby it is excellent in all of the biodegradability, mechanical properties such as tensile strength and tear strength, and barrier properties such as oxygen permeability and moisture permeability. Therefore, the biodegradable laminated film can be applied to more diverse fields such as packaging materials for refrigerated and frozen foods, packaging materials for electronic materials, and medical infusion bags, where barrier properties are important, whereby it exhibits excellent characteristics.

Further, as the base layer is formed from a biodegradable resin composition comprising fine particles having an average length of less than 0.1 μm, it is possible to further enhance the biodegradability, durability, and processability of the biodegradable laminated film.

**Brief Description of Drawings**

Fig. 1 shows a biodegradable laminated film according to an embodiment.
Fig. 2 shows a biodegradable laminated film according to another embodiment.

[Explanation of Reference Numerals]

1: biodegradable laminated film
100: base layer
200: barrier layer

**Best Mode for Carrying out the Invention**

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

**Biodegradable laminated film**

The biodegradable laminated film according to an embodiment comprises a base layer formed from a biodegradable resin composition; and a barrier layer located on at least one side of the base layer and formed from a coating composition, wherein the coating composition comprises nanocellulose.

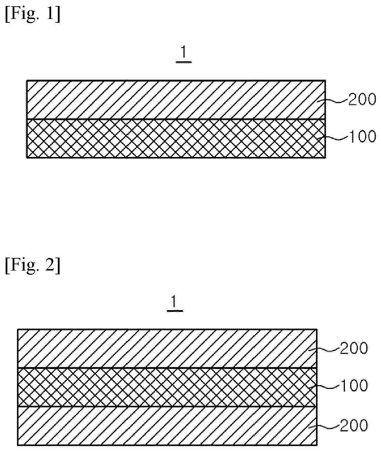

Fig. 1 shows a biodegradable laminated film according to an embodiment. Fig. 2 shows a biodegradable laminated film according to another embodiment.

Specifically, Fig. 1 illustrates a biodegradable laminated film (1) in which a barrier layer (200) is formed on one side of a base layer (100). Fig. 2 illustrates a biodegradable laminated film (1) in which a barrier layer (200) is formed on both sides of a base layer (100).

As shown in Figs. 1 and 2, the biodegradable laminated film comprises a barrier layer formed from a coating composition containing nanocellulose on one side or both sides of a base layer, whereby it is excellent in all of the biodegradability, mechanical properties such as tensile strength and tear strength, and barrier properties such as oxygen permeability and moisture permeability. In particular, when the biodegradable laminated film is applied to packaging materials for refrigerated and frozen foods, packaging materials for electronic materials, and medical infusion bags, where barrier properties are important, it is possible to effectively prevent deterioration or damage during storage and transportation of the products.

Specifically, the biodegradable laminated film may have a tensile strength of 30 MPa or more. For example, the tensile strength of the biodegradable laminated film may be 30 MPa or more, 31 MPa or more, or 33 MPa or more, or it may be 30 MPa to 70 MPa, 30 MPa to 60 MPa, 31 MPa to 55 MPa, 31 MPa to 50 MPa, 33 MPa to 48 MPa, 41 MPa to 48 MPa, or 41 MPa to 48 MPa.

In addition, the biodegradable laminated film may have a tear strength of 300 N/cm to 1,000 N/cm. For example, the tear strength of the biodegradable laminated film may be 300 N/cm to 1,000 N/cm, 330 N/cm to 900 N/cm, 350 N/cm to 850 N/cm, 350 N/cm to 790 N/cm, 600 N/cm to 850 N/cm, 600 N/cm to 790 N/cm, 650 N/cm to 850 N/cm, 650 N/cm to 790 N/cm, 700 N/cm to 850 N/cm, or 700 N/cm to 790 N/cm.

The biodegradable laminated film may have an oxygen permeability of 130 $cc/m^2 \cdot day \cdot atm$ or less. For example, the oxygen permeability of the biodegradable laminated film may be 130 $cc/m^2 \cdot day \cdot atm$ or less, 115 $cc/m^2 \cdot day \cdot atm$ or less, 100 $cc/m^2 \cdot day \cdot atm$ or less, 85 $cc/m^2 \cdot day \cdot atm$ or less, or 65 $cc/m^2 \cdot day \cdot atm$ or less, or it may be 1 $cc/m^2 \cdot day \cdot atm$ to 130 $cc/m^2 \cdot day \cdot atm$, 5 $cc/m^2 \cdot day \cdot atm$ to 115 $cc/m^2 \cdot day \cdot atm$, 10 $cc/m^2 \cdot day \cdot atm$ to 110 $cc/m^2 \cdot day \cdot atm$, 15 $cc/m^2 \cdot day \cdot atm$ to 85 $cc/m^2 \cdot day \cdot atm$, 15 $cc/m^2 \cdot day \cdot atm$ to 80 $cc/m^2 \cdot day \cdot atm$, 15 $cc/m^2 \cdot day \cdot atm$ to 65 $cc/m^2 \cdot day \cdot atm$, 18 $cc/m^2 \cdot day \cdot atm$ to 65 $cc/m^2 \cdot day \cdot atm$, 15 $cc/m^2 \cdot day \cdot atm$ to 30 $cc/m^2 \cdot day \cdot atm$, 15 $cc/m^2 \cdot day \cdot atm$ to 25 $cc/m^2 \cdot day \cdot atm$, 35 $cc/m^2 \cdot day \cdot atm$ to 80 $cc/m^2 \cdot day \cdot atm$, 35 $cc/m^2 \cdot day \cdot atm$ to 65 $cc/m^2 \cdot day \cdot atm$, or 40 $cc/m^2 \cdot day \cdot atm$ to 65 $cc/m^2 \cdot day \cdot atm$.

In addition, the biodegradable laminated film may have a moisture permeability of 200 $cc/m^2 \cdot day \cdot atm$ or less. For example, the moisture permeability of the biodegradable laminated film may be 200 $cc/m^2 \cdot day \cdot atm$ or less, 175 $cc/m^2 \cdot day \cdot atm$ or less, 150 $cc/m^2 \cdot day \cdot atm$ or less, 115 $cc/m^2 \cdot day \cdot atm$ or less, 100 $cc/m^2 \cdot day \cdot atm$ or less, or 99 $cc/m^2 \cdot day \cdot atm$ or less, or it may be 15 $cc/m^2 \cdot day \cdot atm$ to 200 $cc/m^2 \cdot day \cdot atm$, 35 $cc/m^2 \cdot day \cdot atm$ to 180 $cc/m^2 \cdot day \cdot atm$, 55 $cc/m^2 \cdot day \cdot atm$ to 155 $cc/m^2 \cdot day \cdot atm$, 60 $cc/m^2 \cdot day \cdot atm$ to 120 $cc/m^2 \cdot day \cdot atm$, 65 $cc/m^2 \cdot day \cdot atm$ to 100 $cc/m^2 \cdot day \cdot atm$, 75 $cc/m^2 \cdot day \cdot atm$ to 100 $cc/m^2 \cdot day \cdot atm$, 80 $cc/m^2 \cdot day \cdot atm$ to 100 $cc/m^2 \cdot day \cdot atm$, 70 $cc/m^2 \cdot day \cdot atm$ to 85 $cc/m^2 \cdot day \cdot atm$, 85 $cc/m^2 \cdot day \cdot atm$ to 100 $cc/m^2 \cdot day \cdot atm$, 90 $cc/m^2 \cdot day \cdot atm$ to 99 $cc/m^2 \cdot day \cdot atm$, or 95 $cc/m^2 \cdot day \cdot atm$ to 99 $cc/m^2 \cdot day \cdot atm$. \

As the oxygen permeability and moisture permeability of the biodegradable laminated film satisfy the above ranges, it may have excellent barrier properties.

Specifically, the biodegradable laminated film may have a biodegradability of 90% or more according to KS M3100-1. For example, the biodegradability of the biodegradable laminated film may be 90% or more, 91% or more, or 92% or more.

Specifically, the biodegradability of the biodegradable laminated film may be calculated by measuring the amount of carbon dioxide generated according to KS M3100-1. For example, an inoculum container having compost only manufactured in a compost factory is prepared. A test container in which a film at 5% by weight of the dry weight of the compost has been added is prepared. Then, they are cultivated for 180 days under the conditions of a temperature of $58 \pm 2 \, °C$, a moisture content of 50%, and an oxygen concentration of 6% or more. Carbon dioxide generated in each container is collected and titrated with an aqueous solution of phenolphthalein to measure the amount of carbon dioxide generated. The biodegradability may be calculated according to the following Equation B.

[Equation B]

$$\text{Biodegradability (\%)} = \{(\text{amount of } CO_2 \text{ generated in a test container}) - (\text{amount of } CO_2 \text{ generated in an inoculum container}) \times 100/(\text{theoretical amount of } CO_2 \text{ generated in a test container})$$

**Barrier layer**

First, the biodegradable laminated film comprises a barrier layer located on at least one side of the base layer, wherein the barrier layer is formed from a coating composition, and the coating composition comprises nanocellulose.

Specifically, the biodegradable laminated film comprises a barrier layer according to an embodiment, whereby it is excellent in all of the mechanical properties such as tensile strength and tear strength and barrier properties such as oxygen permeability and moisture permeability. Therefore, it can be readily applied to more diverse fields such as packaging materials for refrigerated and frozen foods, packaging materials for electronic materials, and medical infusion bags, where barrier properties are required.

In addition, as the barrier layer comprises nanocellulose, it can maximize barrier properties while having excellent biodegradability. Thus, biodegradability is not deteriorated even when the biodegradable laminated film comprises the barrier layer.

Specifically, in a conventional film in which a barrier layer is formed on at least one side of a base layer formed from a biodegradable resin composition, biodegradability may be deteriorated although barrier properties may be enhanced by comprising the barrier layer. However, as the biodegradable laminated film according to an embodiment comprises a barrier layer formed from a coating composition containing nanocellulose, it has excellent barrier properties while biodegradability is not deteriorated. In particular, if the base layer comprises polybutyleneadipate terephthalate (PBAT), it is possible to maximize enhancements in biodegradability and barrier properties.

The barrier layer may have a thickness of 20 nm to 10 μm. For example, the thickness of the barrier layer may be 20 nm to 10 μm, 55 nm to 8 μm, 70 nm to 5 μm, 80 nm to 4 μm, 85 nm to 3 μm, 95 nm to 2.5 μm, 1 μm to 3 μm, or 1 μm to 2.5 μm. As the thickness of the barrier layer satisfies the above range, barrier properties and productivity can be further enhanced. If the thickness of the barrier layer is thinner than the above range, it is difficult to have sufficient barrier properties. If it is thicker than the above range, the process cost is high, and the productivity is low.

Coating composition

The barrier layer is formed from a coating composition, and the coating composition comprises nanocellulose.

Specifically, the coating composition may comprise nanocellulose and a solvent. More specifically, it may be one in which nanocellulose is dispersed in a solvent, and the solvent may be at least one selected from the group consisting of water and alcohol. For example, the coating composition may be one in which nanocellulose is dispersed in a solvent such as water or alcohol, one in which nanocellulose is dispersed in a solvent as a mixture of water and alcohol, or one in which nanocellulose is firstly dispersed in water, which is then secondly dispersed in alcohol.

When both water and alcohol are used as the solvent, the weight ratio of water to alcohol may be 80:20 to less than 50:50 or 65 to 35 to less than 50:50. If the weight ratio of water and alcohol does not satisfy the above range, specifically, if the content of alcohol is greater than that of water, whereby nanocellulose is first dispersed in alcohol instead of water, the dispersibility is lowered, which may cause precipitation in the coating composition. Thus, biodegradability, mechanical properties, and barrier properties may be deteriorated.

In addition, the coating composition may further comprise a silane-based additive. For example, the coating composition may further comprise a silane-based additive selected from the group consisting of trimethyltrimethoxysilane, tetramethoxysilane, dimethoxydimethylsilane, trimethoxyphenylsilane, and 3-methylacryloxypropyltrimethoxysilane.

First, the nanocellulose may be at least one selected from the group consisting of cellulose nanocrystals (CNC), cellulose nanofibers (CNF), and microfibrillated cellulose (MFC). Cellulose nanofibers, which are relatively long fibers, are preferred in that they are advantageous for forming a high-density barrier layer capable of enhancing barrier properties, but it is not limited thereto.

For example, the nanocellulose may be one or more selected from the group consisting of cellulose nanocrystals (CNC), cellulose nanofibers (CNF), microfibrillated cellulose (MFC), hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

In addition, the nanocellulose may have an average diameter of 1 μm or less. For example, the average diameter of the nanocellulose may be 1 μm or less, 650 nm or less, 300 nm or less, 150 nm or less, or 100 nm or less, or it may be 1 nm to 1 μm, 10 nm to 850 nm, 25 nm to 600 nm, 40 nm to 450 nm, 45 nm to 250 nm, 45 nm to 150 nm, 45 nm to 120 nm, or 50 nm to 100 nm.

The nanocellulose may have an average length of 0.1 μm or more. For example, the average length of the nanocellulose may be 0.1 μm or more, 0.2 μm or more, 1 μm or more, 2.5 μm or more, 3 μm or more, or 5 μm or more, or it may be 0.1 μm to 15 μm, 0.2 μm to 10 μm, 0.2 μm to 8 μm, 1 μm to 6 μm, 2 μm to 5 μm, or 3 μm to 5 μm.

As the average length and average diameter of the nanocellulose satisfy the above ranges, barrier properties, particularly oxygen permeability and moisture permeability, may be enhanced without deteriorating biodegradability and mechanical properties. In addition, if the average length and average diameter of the nanocellulose are longer than the average length and average diameter of the fine particles to be described below, it may be more preferable from the viewpoint of enhancing barrier properties.

In addition, the content of the nanocellulose may be 0.05% by weight to 10% by weight based on the total weight of the coating composition. For example, the coating composition may be one in which nanocellulose is dispersed in a solvent in an amount of 0.05% by weight to 10% by weight. The content of the nanocellulose may be 0.05% by weight to 10% by weight, 0.1% by weight to 8% by weight, 0.5 to 6% by weight, 0.7% by weight to 5% by weight, or 1% by weight to 4% by weight, based on the total weight of the coating composition. As the content of the nanocellulose satisfies the above range, barrier properties, particularly oxygen permeability and moisture permeability, may be enhanced without deteriorating biodegradability and mechanical properties.

According to another embodiment, the coating composition may be one pretreated by at least one method selected from the group consisting of ultrasonic pretreatment, agitation pretreatment, and hydrophobic pretreatment. Specifically, as the barrier layer is formed from a pretreated coating composition, barrier properties, particularly oxygen permeability and moisture permeability, may be further enhanced without deteriorating biodegradability and mechanical properties.

The ultrasonic pretreatment may be carried out for less than 30 minutes with an energy dose of 30,000 J or less. For example, the ultrasonic pretreatment may be carried out for less than 30 minutes, 25 minutes or less, 13 minutes or less, 6 minutes or less, 3 minutes or less, or 2 minutes or less, with an energy dose of 30,000 J or less, 15,000 J or less, 10,000 J or less, 8,000 J or less, 5,000 J or less, or 3,000 J or less. As the energy dose and the operation time of the ultrasonic pretreatment satisfy the above ranges, the effect of the ultrasonic pretreatment, that is, the enhancement in dispersibility can be maximized.

In addition, the agitation pretreatment may be carried out for 1 minute to 90 minutes at 15,000 rpm or less. For example, the agitation pretreatment may be carried out using an agitator or a homogenizer and may be carried out for 1 minute to 90 minutes, 2 minutes to 60 minutes, 3 minutes to 45 minutes, 4 minutes to 35 minutes, or 5 minutes to 30 minutes at 15,000 rpm or less, 12,000 rpm or less, 10,000 rpm or less, 5,000 rpm or less, 3,000 rpm or less, or 2,000 rpm or less.

The hydrophobic pretreatment may be carried out by at least one method selected from the group consisting of acetylation, silanization, crosslinking, fluorination, the addition of an alkyl ketene dimer (AKD), and the addition of an alkyl succinic anhydride (ASA).

Specifically, as some of the hydroxyl groups of the nanocellulose are substituted with hydrophobic groups having a low affinity with water through the hydrophobic pretreatment method, oxygen permeability and moisture permeability characteristics can be further enhanced. For example, the silanization may be carried out by using trimethyltrimethoxysilane, tetramethoxysilane, dimethoxydimethylsilane, trimethoxyphenylsilane, 3-methylacryloxypropyltrimethoxysilane, or titanium butoxide, but it is not limited thereto.

The coating composition may have an average particle size of 100 nm or more. For example, the average particle size of the coating composition may be 100 nm or more, 1,000 nm or more, or 1,500 nm or more, and 10,000 nm or less, 7,000 nm or less, 4,500 nm or less, or 2,600 nm or less, or it may be 100 nm to 10,000 nm, 1,000 nm to 6,000 nm, 1,500 nm to 5,000 nm, 100 nm to 3,000 nm, 150 nm to 2,500 nm, and 1,500 nm to 3,000 nm.

In addition, the coating composition may have a particle size deviation of 30% or less. For example, the particle size deviation of the coating composition may be 30% or less, 28% or less, 25% or less, 15% or less, or 10% or less.

As the average particle size and particle size deviation of the coating composition satisfy the above ranges, barrier properties, particularly oxygen permeability and moisture permeability, may be further enhanced without deteriorating biodegradability and mechanical properties.

The average particle size and particle size deviation of the coating composition may be measured through dynamic light scattering (DLS) at a temperature of 25 °C and a measurement angle of 175° using Zetasizer Nano ZS (manufacturer: Marven).

In addition, the coating composition may have a rate of change in light transmittance of less than 30% according to the following Equation 1.

[Equation 1]

$$Rate\ of\ change\ in\ light\ transmittance\ (\%) = \frac{|LT1 - LT2|}{LT1} \times 100$$

In Equation 1, LT1 is a first light transmittance (%) of the coating composition when measured under the conditions of a temperature of 30 °C and a wavelength of 850 nm, and LT2 is a second light transmittance (%) measured after 12 hours under the same conditions.

In general, nanocellulose as a natural material is prepared in the form of a gel or in the form of a dry powder through lyophilization to reduce its volume for convenient storage and transportation. Since aggregation takes place during the preparation process, however, secondary particles as agglomerated rather than single particles may be present. Therefore, if nanocellulose in the form of a gel or dry powder is used, there is a problem in that mechanical properties are very low due to poor dispersibility although biodegradability can be enhanced.

However, as the coating composition according to an embodiment comprises nanocellulose having the characteristics described above in a specific amount, it is excellent in dispersibility, particularly, the rate of change in light transmittance according to the above Equation 1. Thus, as the biodegradable laminated film according to an embodiment comprises a barrier layer formed from the coating composition, it is excellent in all of the dispersibility, dispersion stability, transparency, and barrier properties.

The rate of change in light transmittance may be measured using Turbiscan (manufacturer: Formulaction). Specifically, Turbiscan is a device that measures the change in dispersion stability over time under a constant temperature condition for the total height of a sample, which can provide a result of quantitative analysis for dispersion stability. More specifically, a light source of a specific wavelength is irradiated for the height of the entire sample using Turbiscan to measure the amount that collides with the sample particles and is scatted and the amount that passes through the sample particles.

The first light transmittance (LT1) and the second light transmittance (LT2) may be obtained by placing the coating composition in a container and measuring the light transmittance of the entire height thereof. Specifically, the light transmittances (LT1 and LT2) may be ones measured in the upper portion for the entire height of the coating composition. The lower the dispersibility and dispersion stability of a sample, the more the heavy particles sink to settle down; thus, the light transmittance of the upper portion increases. Accordingly, the greater the rate of change in light transmittance, the lower the dispersibility and dispersion stability. Here, the upper portion refers to a portion from the top to a position that is 1/3 of the total height of the sample.

Specifically, the coating composition is measured at a temperature of 30 °C and a wavelength of 850 nm for a first light transmittance (LT1) and for a second light transmittance (LT2) after 12 hours have elapsed under the same conditions. Then, the rate of change in light transmittance is calculated as a ratio of the absolute value of the difference between LT1 and LT2 to LT1 as shown in the above Equation 1. More specifically, the rate of change in light transmittance can be calculated according to Equation 1. It refers to a ratio of the absolute value of the difference between the initial light transmittance (LT1) measured at a temperature of 30°C and a wavelength of 850 nm and the light transmittance (LT2) measured after 12 hours under the same conditions to LT1.

The coating composition may have a rate of change in light transmittance of less than 30% according to Equation 1. For example, the rate of change in light transmittance according to Equation 1 may be less than 30%, 29% or less, or 25% or less, or it may be 1% to less than 30%, 3% to 29%, 5% to 29%, 5% to 25%, 8% to 29%, 8% to 15%, or 9% to 10% As the rate of change in light transmittance according to Equation 1 satisfies the above range, all of the dispersibility, dispersion stability, transparency, and barrier properties may be enhanced.

Specifically, the first light transmittance (LT1) may be 3% to 35%, 3% to 30%, 3% to 28%, 7% to 28%, 9% to 33%, 9% to 30%, 10% to 33%, or 10% to 28%. The second light transmittance (LT2) may be 5% to 40%, 7% to 33%, 9% to 40%, 9% to 35%, 10% to 32%, 11% to 34%, or 11% to 31%.

**Base layer**

The base layer is formed from a biodegradable resin composition.

The base layer may have a thickness of 5 $\mu$m to 200 $\mu$m. For example, the thickness of the base layer may be 5 $\mu$m to 200 $\mu$m, 10 $\mu$m to 150 $\mu$m, 15 $\mu$m to 130 $\mu$m, 20 $\mu$m to 180 $\mu$m, 20 $\mu$m to 130 $\mu$m, 25 $\mu$m to 145 $\mu$m, 25 $\mu$m to 120 $\mu$m, 25 $\mu$m to 80 $\mu$m, or 25 $\mu$m to 60 $\mu$m.

Biodegradable resin composition

According to an embodiment, the biodegradable resin composition may comprise at least one resin selected from the group consisting of polylactic acid (PLA), polybutylene adipate terephthalate (PBAT), polybutylene succinate (PBS), polybutylene succinate terephthalate (PBST), polybutylene succinate adipate (PBSA), polybutylene adipate (PBA), and polycaprolactone (PCL). The resin may have a purity of 85% or more, 90% or more, 95% or more, or 99% or more, but it is not limited thereto.

According to another embodiment, the biodegradable resin composition may comprise a diol component comprising 1,4-butanediol, 1,2-ethanediol, 1,3-propanediol, or derivatives thereof and at least one dicarboxylic acid component selected from the group consisting of terephthalic acid, dimethyl terephthalic acid, adipic acid, succinic acid, and derivatives thereof.

Specifically, the diol component may comprise 1,4-butanediol, 1,2-ethanediol, 1,3-propanediol, or derivatives thereof. More specifically, the diol component may comprise 1,4-butanediol or a derivative thereof. If the diol component comprises 1,4-butanediol or a derivative thereof, especially, if the diol component is composed of 1,4-butanediol alone, it may be more advantageous for enhancing biodegradability, mechanical properties such as tensile strength and tear strength, or durability.

In addition, the diol component may comprise 1,4-butanediol, 1,2-ethanediol, 1,3-propanediol, or a derivative thereof in an amount of 95% by mole or more based on the total number of moles of the diol component. For example, the diol component may comprise 1,4-butanediol, 1,2-ethanediol, 1,3-propanediol, or derivatives thereof in an amount of 95% by mole or more, 97% by mole or more, 98% by mole or more, 99% by mole or more, or 100% by mole, based on the total number of moles of the diol component.

If necessary, the diol component may further comprise a second diol different from the first diol, which is 1,4-butanediol, 1,2-ethanediol, 1,3-propanediol, or derivatives thereof.

Specifically, the second diol may be one or more selected from the group consisting of 1,2-propanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, 1,4-cyclohexanedimethanol, and ethylene glycol.

For example, the biodegradable resin composition may further comprise the second diol in an amount of 5% by mole or less, 3% by mole or less, 2% by mole or less, or 1% by mole or less, based on the total number of moles of the diol component.

In addition, the dicarboxylic acid component may comprise one or more selected from the group consisting of terephthalic acid, dimethyl terephthalic acid, adipic acid, succinic acid, and derivatives thereof.

For example, the biodegradable resin composition may comprise one or more selected from the group consisting of terephthalic acid, dimethyl terephthalic acid, adipic acid, succinic acid, and derivatives thereof in an amount of 50% by mole or more, 75% by mole or more, 90% by mole or more, 95% by mole or more, or 100% by mole, or in an amount of 50% by mole to 100% by mole, 75% by mole to 100%, 90% by mole to 100% by mole, 95% by mole to 100% by mole, 50% by mole to 85% by mole, 50% by mole to 60% by mole, 70% by mole to 65% by mole, or 80% by mole to 90% by mole, based on the total number of moles of the dicarboxylic acid component.

According to another embodiment, the dicarboxylic acid component may comprise a first dicarboxylic acid that is one or more selected from the group consisting of terephthalic acid, dimethyl terephthalic acid, and derivatives thereof and a second dicarboxylic acid that is one or more selected from the group consisting of adipic acid, succinic acid, and derivatives thereof. Specifically, the first dicarboxylic acid may be terephthalic acid or dimethyl terephthalic acid, and the second dicarboxylic acid component may be adipic acid or succinic acid.

The biodegradable resin composition may comprise the first dicarboxylic acid in an amount of 48% by mole or more or 50% by mole or more, or in an amount of 48% by mole to 80% by mole, 48% by mole to 65% by mole, 48% by mole to 60% by mole, 50% by mole to 55% by mole, 48% by mole to 52% by mole, or 49% by mole to 51% by mole, based on the total number of moles of the dicarboxylic acid component.

The biodegradable resin composition may comprise the second dicarboxylic acid in an amount of 53% by mole or less or 50% by mole or less, or in an amount of 40% by mole to 53% by mole, 46% by mole to 53% by mole, 48% by mole to 52% by mole, or 49% by mole to 51% by mole, based on the total number of moles of the dicarboxylic acid component. If the content of the second dicarboxylic acid exceeds the above range, mechanical properties and durability may be deteriorated, resulting in lower processability and productivity.

In addition, the molar ratio of the second dicarboxylic acid to the first dicarboxylic acid may be 1:0.5 to 1.5, 1:0.55 to 1.55, 1:0.6 to 1.4, 1:0.7 to 1.3, 1:0.8 to 1.2, 1:0.85 to 1.15, 1:0.9 to 1.1, or 1:0.95 to 1.05. As the molar ratio of the second dicarboxylic acid and the first dicarboxylic acid satisfies the above range, it is possible to enhance all of the biodegradability, mechanical properties, and durability.

The molar ratio of the dicarboxylic acid component to the diol component may be 1:0.5 to 2. For example, the molar ratio of the dicarboxylic acid component to the diol component may be 1:0.5 to 2, 1:0.5 to 1.5, 1:0.7 to 1.3, or 1:0.9 to 1.1. As the molar ratio of the dicarboxylic acid component and the diol component satisfies the above range, it is possible to enhance all of the biodegradability, mechanical properties, and durability without discoloration such as yellowing.

According to another embodiment, the biodegradable resin composition may comprise fine particles having an average length of less than 0.1 $\mu$m. Specifically, as the base layer is formed from a biodegradable resin composition comprising fine particles having an average length of less than 0.1 $\mu$m, it is possible to enhance all of the biodegradability, mechanical properties, and durability.

The fine particles may be one or more selected from the group consisting of cellulose nanocrystals (CNC), cellulose nanofibers (CNF), microfibrillated cellulose (MFC), hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, cyclohexyl cellulose, silica particles, and inorganic particles.

Cellulose nanocrystals are preferable in that it is advantageous for obtaining a desired final molecular weight while enhancing dispersibility since their aggregation rate is low during polycondensation by virtue of their relatively low aspect ratio, but it is not limited thereto. More specifically, the nanocellulose employed in the coating composition may be cellulose nanofibers, and the fine particles employed in the biodegradable resin composition may be cellulose nanocrystals.

The fine particles may have an average length of less than 0.1 $\mu$m. For example, the average length of the fine particles may be less than 0.1 $\mu$m, 500 nm or less, 350 nm or less, or 250 nm or less, or it may be 10 nm to less than 0.1 $\mu$m, 30 nm to 900 nm, 50 nm to 650 nm, 80 nm to 400 nm, 100 nm to 300 nm, 130 nm to 250 nm, or 130 nm to 220 nm.

In addition, the fine particles may have an average diameter of 100 nm or less. For example, the average diameter of the fine particles may be 100 nm or less, 75 nm or less, or 50 nm or less, or it may be 1 nm to 100 nm, 5 nm to 80 nm, 5 nm to 65 nm, 8 nm to 55 nm, 10 nm to 55 nm, 30 nm to 55 nm, or 45 nm to 52 nm.

As the average length and the average diameter of the fine particles satisfy the above ranges, biodegradability and physical properties such as tensile strength and tear strength can be further enhanced.

In addition, the content of the fine particles may be 0.01% by weight to 3% by weight based on the total weight of the biodegradable resin composition. The content of the fine particles may be 0.01% by weight to 3% by weight, 0.05% by weight to 1.5% by weight, 0.05% by weight to 1% by weight, 0.07% by weight to 0.5% by weight, 0.09% by weight to 0.35% by weight, 0.1% by weight to 0.3% by weight, or 0.15% by weight to 0.3% by weight, based on the total weight of the biodegradable resin composition.

According to another embodiment, the fine particles may be ones pretreated by at least one method selected from the group consisting of ultrasonic pretreatment, agitation pretreatment, and hydrophobic pretreatment. Specifically, the pretreatment may be at least one method selected from the group consisting of ultrasonic pretreatment, agitation pretreatment, and hydrophobic pretreatment of fine particles dispersed in a solvent. As the base layer is formed from a biodegradable resin composition comprising pretreated fine particles, it is possible to further enhance mechanical properties and durability without deteriorating biodegradability.

Details on the solvent, ultrasonic pretreatment, agitation pretreatment, and hydrophobic pretreatment are as described above.

**Process for preparing a biodegradable laminated film**

The process for preparing a biodegradable laminated film according to another embodiment comprises preparing a base layer from a biodegradable resin composition; and forming a barrier layer from a coating composition on at least one side of the base layer, wherein the coating composition comprises nanocellulose.

First, a base layer is prepared from a biodegradable resin composition.

Details on the biodegradable resin composition are as described above.

(i) According to another embodiment, the step of preparing a base layer may comprise preparing a polymer by polycondensation of a biodegradable resin composition comprising at least one resin selected from the group consisting of polylactic acid (PLA), polybutylene adipate terephthalate (PBAT), polybutylene succinate (PBS), polybutylene succinate terephthalate (PBST), polybutylene succinate adipate (PBSA), polybutylene adipate (PBA), and polycaprolactone (PCL).

Specifically, the biodegradable resin composition comprising at least one resin selected from the group consisting of polylactic acid (PLA), polybutylene adipate terephthalate (PBAT), polybutylene succinate (PBS), polybutylene succinate terephthalate (PBST), polybutylene succinate adipate (PBSA), polybutylene adipate (PBA), and polycaprolactone (PCL) may be heated to 120 °C or higher, 125 °C or higher, 130°C or higher, 135°C or higher, or 140°C or higher, thereby preparing a slurry form. The step of preparing a slurry may be carried out with a compounding apparatus, but it is not limited thereto.

Thereafter, the slurry may be subjected to a polycondensation reaction at 280 °C or lower and 1.0 Torr or lower for 1 hour to 8 hours to prepare a polymer. For example, the slurry may be subjected to a polycondensation reaction at 280°C or lower, 260°C or lower, 245°C or lower, 240°C or lower, 180°C to 280°C, 190°C to 260°C, 200°C to 255°C, 220°C to 245°C, 230°C to 250°C, or 235°C to 245°C, and 1.0 Torr or lower, 0.9 Torr or lower, 0.7 Torr or lower, or 1.0 Torr, for 1 hour to 8 hours, 2 hours to 7 hours, 4 hours to 6.5 hours, or 5 hours to 6.5 hours, to prepare a polymer.

In addition, fine particles or pretreated fine particles may be additionally fed prior to the polycondensation reaction. Specifically, fine particles or pretreated fine particles may be further added to the reactant for the polycondensation reaction, more specifically, the biodegradable resin composition or a slurry formed therefrom. Details on the fine particles are as described above.

The fine particles or pretreated fine particles may preferably be fed at 160°C or lower, 145 °C or lower, or 130°C or lower from the viewpoint of enhancing durability, but it is not limited thereto.

The fine particles or pretreated fine particles may preferably be fed at a rate of 2 kg/minute to 10 kg/minute, 2.5 kg/minute to 9.5 kg/minute, or 3 kg/minute to 8 kg/minute, to prevent agglomeration with the enhancement of hydrolysis resistance and to maintain an appropriate process speed. If the feeding rate is less than the above range, an additional process may be required, and the rate may be too low, resulting in low efficiency. In addition, if the feeding rate exceeds the above range, re-agglomeration may take place, thereby deteriorating dispersibility.

In addition, a catalyst may be additionally fed to the biodegradable resin composition or a slurry formed therefrom. Specifically, a catalyst may be further added to the reactant for the polycondensation reaction, more specifically, the biodegradable resin composition or a slurry formed therefrom.

For example, at least one catalyst selected from the group consisting of tin octoate, titanium isopropoxide, tetrapropyl titanate, tetrabutyl titanate, tetraisopropyl titanate, germanium oxide, germanium methoxide, germanium ethoxide, tetramethyl germanium, tetraethyl germanium, and germanium sulfide may be further added to the reactant for the polycondensation reaction, more specifically, the biodegradable resin composition or a slurry formed therefrom.

The content of the catalyst may be 80 ppm to 3,000 ppm based on the total weight of the reactant subjected to the polycondensation reaction. For example, the content of the catalyst may be 80 ppm to 3,000 ppm, 150 ppm to 1,500 ppm, 200 ppm to 1,000 ppm, 250 ppm to 850 ppm, 300 ppm to 600 ppm, or 350 ppm to 450 ppm, based on the total weight of the reactant subjected to the polycondensation reaction.

The polymer may have a number average molecular weight of 40,000 g/mole or more. For example, the number average molecular weight of the polymer may be 40,000 g/mole or more, 50,000 g/mole or more, 55,000 g/mole or more, or 60,000 g/mole or more, or it may be 40,000 g/mole to 70,000 g/mole, 45,000 g/mole to 65,000 g /mole, or 50,000 g/mole to 62,000 g/mole. As the number average molecular weight of the polymer satisfies the above range, mechanical properties, processability, and productivity can be further enhanced.

Thereafter, the polymer may be cooled to 15°C or lower, 10°C or lower, or 6°C or lower, and the cooled polymer may then be cut to prepare pellets. The cutting step may be carried out using a pellet cutter without limitations as long as it is commonly used in the art, and the pellets may have various shapes.

Thereafter, the pellets may be dried and melt-extruded to prepare a base layer.

The drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying step conditions of the pellets satisfy the above range, quality may be further enhanced.

The melt-extrusion may be carried out at a temperature of 270°C or lower. For example, the melt-extrusion may be carried out at a temperature of 270°C or lower, 235°C or lower, 200°C or lower, or 190°C or lower. The melt-extrusion may be carried out by a blown film process, but it is not limited thereto.

(ii) According to another embodiment, the step of preparing a base layer may comprise subjecting a biodegradable resin composition comprising a diol component and a dicarboxylic acid component to an esterification reaction to prepare a prepolymer; and subjecting the prepolymer to a polycondensation reaction to prepare a polymer.

Details on the diol component and the dicarboxylic acid component are as described above.

Specifically, the biodegradable resin composition prepared by mixing a diol component and a dicarboxylic acid component may be subjected to an esterification reaction to prepare a prepolymer.

More specifically, the esterification reaction may be carried out as a one-step esterification reaction or as a two-step esterification reaction through first and second esterification reactions.

If the esterification reaction is carried out as a one-step esterification reaction, the one-step esterification reaction may be carried out at 160°C to 260°C, 180°C to 245°C, 195°C to 220°C, 200°C to 215°C, or 205°C to 215°C, for 1 hour to 4 hours, 1.5 hours to 3 hours, or 1.5 hours to 2.5 hours.

In addition, if the esterification reaction is carried out as a two-step esterification reaction, the step of preparing a prepolymer may comprise subjecting the diol component and a first dicarboxylic acid to a first esterification reaction at 190°C to 260°C; and adding the diol component and a second dicarboxylic acid to the first esterification reaction product and subjecting them to a second esterification reaction at 160°C to 240°C.

Details on the first and second dicarboxylic acids are as described above.

For example, the first esterification reaction may be carried out at 190°C to 260°C, 195°C to 235°C, 200°C to 220°C, or 205°C to 215°C, for 1 hour to 2.5 hours, 1.3 hours to 2.2 hours, or 1.5 hours to 2.2 hours.

The second esterification reaction may be carried out at 160°C to 240°C, 180°C to 225°C, 195°C to 220°C, or 205°C to 215°C, for 1 hour to 4 hours, 1.5 hours to 3 hours, or 1.5 hours to 2.5 hours.

In addition, fine particles or pretreated fine particles may be additionally fed prior to the esterification reaction. Specifically, fine particles or pretreated fine particles may be further added to the reactant for the one-step or two-step esterification reaction. Details on the fine particles are as described above.

More specifically, if the esterification reaction is carried out as a two-step esterification reaction, fine particles or pretreated fine particles may be added to the reactant for the first or second esterification reaction, or fine particles or pretreated fine particles may be added to all of the reactants for the first and second esterification reactions.

If fine particles or pretreated fine particles may be added to the reactant for the first or second esterification reaction, it may be more preferable from the viewpoint of enhancing durability to add them to the reactant for the second esterification reaction rather than the reactant for the first esterification reaction. In addition, if fine particles or pretreated fine particles may be added to all of the reactants for the first and second esterification reactions, it may be more preferable from the viewpoint of enhancing durability that the feeding amount to the reactant for the second esterification reaction is greater than the feeding amount to the reactant for the first esterification reaction.

Details on the feeding temperature and feeding rate of the fine particles or pretreated fine particles are as described above.

In addition, at least one selected from the group consisting of a titanium-based or germanium-based catalyst, an additive, and a stabilizer such as a thermal stabilizer may be additionally fed prior to the esterification reaction step. Specifically, at least one selected from the group consisting of the catalyst, additive, and stabilizer may be further added to at least one selected from the group consisting of the reactant for the esterification reaction, more specifically, the reactant for one-step esterification reaction, the reactant for the first esterification reaction, and the reactant for second esterification reaction.

For example, the catalyst fed prior to the esterification reaction may be at least one selected from the group consisting of titanium isopropoxide, tetrapropyl titanate, tetrabutyl titanate, tetraisopropyl titanate, germanium oxide, germanium methoxide, germanium ethoxide, tetramethyl germanium, tetraethyl germanium, and germanium sulfide. The additive may be at least one selected from the group consisting of silica, potassium, and magnesium. The stabilizer may be at least one selected from the group consisting of trimethyl phosphate, triethyl phosphate, triethyl phosphonacetate, triphenyl phosphate, trimethyl phosphine, phosphoric acid, and phosphorous acid.

The content of the catalyst, additive, or stabilizer fed prior to the esterification reaction may be 80 ppm to 3,000 ppm, respectively, based on the total weight of the reactant for the esterification reaction. For example, the content of the catalyst, additive, or stabilizer fed prior to the esterification reaction may be 80 ppm to 3,000 ppm, 85 ppm to 1,000 ppm, 90 ppm to 600 ppm, 95 ppm to 450 ppm, 100 ppm to 250 ppm, or 100 ppm to 200 ppm, respectively, based on the total weight of the reactant for the esterification reaction.

In addition, the prepolymer may have a number average molecular weight of 800 to 10,000 g/mole. For example, the number average molecular weight of the prepolymer may be 800 g/mole to 10,000 g/mole, 850 g/mole to 6,000 g/mole, 900 g/mole to 3,500 g/mole, 950 g/mole to 2,000 g/mole, or 1,000 g/mole to 2,000 g/mole. As the number average molecular weight of the prepolymer satisfies the above range, it is possible to efficiently increase the molecular weight of the polymer in the polycondensation reaction, thereby further enhancing mechanical properties.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

Thereafter, specifically, the prepolymer may be subjected to a polycondensation reaction at 280°C or lower and 1.5 Torr or lower for 1 hour to 8 hours to prepare a polymer. For example, the prepolymer may be subjected to a polycondensation reaction at 280°C or lower, 265 °C or lower, 250°C or lower, 180°C to 280°C, 200°C to 265°C, 215°C to 255°C, or 235°C to 255°C, and 1.5 Torr or lower, 1.2 Torr or lower, or 1.0 Torr or lower, for 1 hour to 8 hours, 1 hour to 6 hours, 1.5 hours to 4.5 hours, 2 hours to 4.5 hours, or 3 hours to 4 hours, to prepare a polymer.

In addition, at least one selected from the group consisting of a titanium-based or germanium-based catalyst, an additive, and a stabilizer such as a thermal stabilizer may be additionally fed prior to the polycondensation reaction step of the prepolymer. Specifically, at least one selected from the group consisting of the catalyst, additive, and stabilizer may be additionally fed to the prepolymer, more specifically, the reactant for the polycondensation reaction.

Details on the catalyst, additive, and stabilizer are as described above.

A polymer prepared by the polycondensation of the prepolymer may have an acid value of 2.5 mg KOH/g or less. For example, the acid value of a polymer prepared by polycondensation of the prepolymer may be 2.5 mg KOH/g or less, 2.0 mg KOH/g or less, 1.8 mg KOH/g or less, 1.5 mg KOH/g or less, 1.3 mg KOH/g or less, or 1.25 mg KOH/g or less. As the acid value of a polymer prepared by polycondensation of the prepolymer satisfies the above range, the enhancement in mechanical properties and durability can be maximized.

A polymer prepared by the polycondensation of the prepolymer may have a number average molecular weight of 30,000 g/mole or more. For example, the number average molecular weight of the polymer prepared by the polycondensation of the prepolymer may be 30,000 g/mole or more, 35,000 g/mole or more, or 40,000 g/mole or more, or it may be 30,000 g/mole to 70,000 g/mole, 35,000 g/mole to 65,000 g/mole, 35,000 g/mole to 55,000 g/mole, or 40,000 g/mole to 50,000 g/mole. As the number average molecular weight of the polymer prepared by the polycondensation of the prepolymer satisfies the above range, mechanical properties, processability, and productivity can be further enhanced.

Thereafter, the polymer may be cooled, and the cooled polymer may then be cut to prepare pellets. The pellets may be dried and melt-extruded to prepare a base layer. Details on the pellets and the process for preparing a base layer are as described above.

Thereafter, a barrier layer is formed from a coating composition on at least one side of the base layer.

Details on the coating composition are as described above.

Specifically, the coating composition may be coated onto at least one side of the base layer to form a barrier layer. The coating may be carried out by gravure coating, gap coating slot die, micro gravure coating, or spray coating, but it is not limited thereto.

## Mode for the Invention

Hereinafter, the present invention will be described in more detail with reference to the following examples. But the following Examples are intended to illustrate the present invention, and the scope of the Examples is not limited thereto only.

**[Example]**

**Preparation of a biodegradable laminated film**

**Example 1**

(1) Preparation of pretreated fine particles

Cellulose nanocrystals (CNC) having an average diameter and average length as shown in Table 1 below as fine particles (FP) were added to water at 2% by weight. Thereafter, it was firstly agitated for 20 minutes at 1,000 rpm using an agitator, which was subjected to secondary ultrasonic pretreatment for 1 minute with an energy dose of 1,500 J to prepare pretreated fine particles.

(2) Preparation of a base layer

10 Kg of L-lactide (PLA; purity of 90% or more; manufacturer: Total Corbion) and 400 ppm of tin octoate (manufacturer: Sigma-Aldrich) as a catalyst were mixed, which was heated to 140°C to prepare a slurry. 0.1% by weight of the pretreated fine particles prepared in step (1) was added to the slurry, which was reacted for 6 hours at 240°C and 1 Torr, while removing water, to prepare a polymer having a number average molecular weight of 60,000 g/mole. Thereafter, it was cooled to 5°C and cut with a pellet cutter to prepare pellets.
The pellets were dried at 80°C for 5 hours and then melt-extruded at 190°C using a blown film extruder (Blown Film Extrusion Line, manufacturer: Eugene Engineering) to prepare a base layer.

(3) Preparation of a pretreated coating composition

Cellulose nanofibers (CNF) having an average diameter and average length as shown in Table 1 below as nanocellulose (NC) were added to water at 1% by weight to prepare a coating composition. Thereafter, the coating composition was pretreated by agitation thereof at 700 rpm for 30 minutes using an agitator to prepare a pretreated coating composition.

(4) Preparation of a biodegradable laminated film

One side of the base layer prepared in step (2) was spray-coated with the pretreated coating composition prepared in step (3) to prepare a biodegradable laminated film having a barrier layer formed on one side of the base layer.

**Example 2**

(1) Preparation of pretreated fine particles

Pretreated fine particles were prepared in the same manner as in step (1) of Example 1.

(2) Preparation of a base layer

50% by mole of 1,4-butanediol (1,4-BDO) and 50% by mole of dimethyl terephthalic acid (DMT) were mixed. 200 ppm of tetrabutyl titanate (manufacturer: Aldrich) as a titanium-based catalyst was added to the mixture. The mixture was then subjected to a first esterification reaction at 210°C for 2 hours until 95% of water as a by-product was discharged.
50% by mole of 1,4-butanediol (1,4-BDO) and 50% by mole of adipic acid (AA) were added to the reaction product of the first esterification reaction. 0.2% by weight of the pretreated fine particles obtained in step (1) and 150 ppm of tetrabutyl titanate (manufacturer: Aldrich) as a titanium-based catalyst were further added thereto. The mixture was then subjected to a second esterification reaction at 210°C for 2 hours until 95% of water as a by-product was discharged, to thereby prepare a prepolymer having a number average molecular weight of 2,000 g/mole.
200 ppm of tetrabutyl titanate (manufacturer: Aldrich) as a titanium-based catalyst and 100 ppm of triethyl phosphate as a thermal stabilizer were added to the prepolymer, which was stabilized for 10 minutes and then subjected to a polycondensation reaction at 240°C and 0.5 Torr for 4 hours to prepare a polymer having a number average molecular weight of about 50,000 g/mole. Thereafter, the polymer was cooled to 5 °C and cut with a pellet cutter to prepare pellets.
The pellets were dried at 80°C for 5 hours and then melt-extruded at 150°C using a blown film extruder (Blown Film Extrusion Line, manufacturer: Eugene Engineering) to prepare a base layer.

(3) Preparation of a pretreated coating composition

Cellulose nanofibers (CNF) having an average diameter and average length as shown in Table 1 below as nanocellulose (NC) were added to water at 2% by weight to prepare a coating composition. Thereafter, the coating composition was subjected to ultrasonic pretreatment for 1 minute with an energy dose of 1,500 J to prepare a pretreated coating composition.

(4) Preparation of a biodegradable laminated film

A biodegradable laminated film was prepared in the same manner as in step (4) of Example 1.

**Example 3**

(1) Preparation of pretreated fine particles

Cellulose nanocrystals (CNC) having an average diameter and average length as shown in Table 1 below as fine particles (FP) were added to water at 2% by weight. Thereafter, it was pretreated by agitation thereof at 10,000 rpm for 5 minutes using a homogenizer to prepare pretreated fine particles.

(2) Preparation of a base layer

A base layer was prepared in the same manner as in Example 2, except that 150 ppm of triethyl phosphate as a thermal stabilizer was added.

(3) Preparation of a pretreated coating composition

Methyltrimethoxysilane (MTMS) was added to water (pH 4) and agitated for 30 minutes, and cellulose nanofibers (CNF) dispersed in water at a concentration of 4% by weight were added thereto for first hydrophobic pretreatment. Here, the cellulose nanofibers (CNF) are nanocellulose, and the average diameter and average length of the cellulose nanofibers are shown in Table 1 below. Thereafter, it was secondarily pretreated by agitation thereof at room temperature at 2,000 rpm for 5 minutes using an agitator to prepare a pretreated coating composition.

(4) Preparation of a film

A biodegradable laminated film was prepared in the same manner as in step (4) of Example 1.

**Example 4**

A biodegradable laminated film was prepared in the same manner as in Example 3, except that the fine particles were not fed in step (2) (step (1) was not carried out).

**Example 5**

(1) Preparation of pretreated fine particles

Pretreated fine particles were prepared in the same manner as in step (1) of Example 3, except that cellulose nanofibers (CNF) were used as fine particles (FP).

(2) Preparation of a base layer

50% by mole of 1,4-butanediol (1,4-BDO) and 50% by mole of dimethyl terephthalic acid (DMT) were mixed. 200 ppm of tetrabutyl titanate (manufacturer: Aldrich) as a titanium-based catalyst was added to the mixture. The mixture was then subjected to a first esterification reaction at 210°C for 2 hours until 95% of water as a by-product was discharged. **[0148]** 50% by mole of 1,4-butanediol (1,4-BDO) and 50% by mole of adipic acid (AA) were added to the reaction product of the first esterification reaction. 0.3% by weight of the pretreated fine particles obtained in step (1) and 150 ppm of tetrabutyl titanate (manufacturer: Aldrich) as a titanium-based catalyst were further added thereto. The mixture was then subjected to a second esterification reaction at 210°C for 2 hours until 95% of water as a by-product was discharged, to thereby prepare a prepolymer having a number average molecular weight of 1,000 g/mole.

200 ppm of tetrabutyl titanate (manufacturer: Aldrich) as a titanium-based catalyst and 100 ppm of triethyl phosphate as a thermal stabilizer were added to the prepolymer, which was stabilized for 10 minutes and then subjected to a polycondensation reaction at 250°C and 1 Torr for 3 hours to prepare a polymer having a number average molecular weight of about 40,000 g/mole. Thereafter, the polymer was cooled to 5°C and cut with a pellet cutter to prepare pellets.

The pellets were dried at 80°C for 5 hours and then melt-extruded at 150°C using a blown film extruder (Blown Film Extrusion Line, manufacturer: Eugene Engineering) to prepare a base layer.

(3) Preparation of a pretreated coating composition

Cellulose nanofibers (CNF) having an average diameter and average length as shown in Table 1 below as nanocellulose (NC) were added to water at 2% by weight to prepare a coating composition. Thereafter, the coating composition was pretreated by agitation thereof at 10,000 rpm for 10 minutes using an agitator to prepare a pretreated coating composition.

(4) Preparation of a biodegradable laminated film

A biodegradable laminated film was prepared in the same manner as in step (4) of Example 1.

**Comparative Example 1**

(1) Preparation of pretreated fine particles

Cellulose nanocrystals (CNC) having an average diameter and average length as shown in Table 1 below as fine particles (FP) were added to water at 2% by weight. Thereafter, it was pretreated by agitation thereof at 1,000 rpm for 20 minutes using an agitator to prepare pretreated fine particles.

(2) Preparation of a biodegradable laminated film

50% by mole of 1,4-butanediol (1,4-BDO) and 45% by mole of dimethyl terephthalic acid (DMT) were mixed. 200 ppm of tetrabutyl titanate (manufacturer: Aldrich) as a titanium-based catalyst was added to the mixture. The mixture was then subjected to a first esterification reaction at 210°C for 2 hours until 95% of water as a by-product was discharged.

50% by mole of 1,4-butanediol (1,4-BDO) and 55% by mole of adipic acid (AA) were added to the reaction product of the first esterification reaction. 0.2% by weight of the pretreated fine particles obtained in step (1) and 150 ppm of tetrabutyl titanate (manufacturer: Aldrich) as a titanium-based catalyst were further added thereto. The mixture was then subjected to a second esterification reaction at 210°C for 2 hours until 95% of water as a by-product was discharged, to thereby prepare a prepolymer having a number average molecular weight of 800 g/mole.

200 ppm of tetrabutyl titanate (manufacturer: Aldrich) as a titanium-based catalyst and 100 ppm of triethyl phosphate as a thermal stabilizer were added to the prepolymer, which was stabilized for 10 minutes and then subjected to a polycondensation reaction at 250°C and 1 Torr for 3 hours to prepare a polymer having a number average molecular weight of about 40,000 g/mole. Thereafter, the polymer was cooled to 5°C and cut with a pellet cutter to prepare pellets.

The pellets were dried at 80°C for 5 hours and then melt-extruded at 150°C using a blown film extruder (Blown Film Extrusion Line, manufacturer: Eugene Engineering) to prepare a biodegradable laminated film.

**Comparative Example 2**

(1) Preparation of a biodegradable laminated film

50% by mole of 1,4-butanediol (1,4-BDO) and 55% by mole of dimethyl terephthalic acid (DMT) were mixed. 200 ppm of tetrabutyl titanate (manufacturer: Aldrich) as a titanium-based catalyst was added to the mixture. The mixture was then subjected to a first esterification reaction at 210°C for 2 hours until 95% of water as a by-product was discharged.

50% by mole of 1,4-butanediol (1,4-BDO) and 45% by mole of adipic acid (AA) were added to the reaction product of the first esterification reaction. 150 ppm of tetrabutyl titanate (manufacturer: Aldrich) as a titanium-based catalyst was further added thereto. The mixture was then subjected to a second esterification reaction at 210°C for 2 hours until 95% of water as a by-product was discharged, to thereby prepare a prepolymer having a number average molecular weight of 1,000 g/mole.

200 ppm of tetrabutyl titanate (manufacturer: Aldrich) as a titanium-based catalyst and 100 ppm of triethyl phosphate as a thermal stabilizer were added to the prepolymer, which was stabilized for 10 minutes and then subjected to a polycondensation reaction at 240°C and 1 Torr for 4 hours to prepare a polymer having a number average molecular weight of about 50,000 g/mole. Thereafter, the polymer was cooled to 5°C and cut with a pellet cutter to prepare pellets.

The pellets were dried at 80°C for 5 hours and then melt-extruded at 150°C using a blown film extruder (Blown Film Extrusion Line, manufacturer: Eugene Engineering) to prepare a biodegradable laminated film.

**Comparative Example 3**

A biodegradable laminated film was prepared in the same manner as in Example 3, except that fine particles were not fed in step (2) (step (1) was not carried out) and that one side of the base layer was coated with a polyvinylidene chloride (PVDC) coating solution (manufacturer: Dow Chemical), instead of the pretreated coating composition, to form a barrier layer by gravure coating in step (2) (step (3) was not carried out).

**Comparative Example 4**

A biodegradable laminated film was prepared in the same manner as in Example 3, except that the coating composition was not pretreated in step (3).

**Comparative Example 5**

A biodegradable laminated film was prepared in the same manner as in Example 3, except that the fine particles were not fed in step (2) (step (1) was not carried out) and that the coating composition was not pretreated in step (3).

**Comparative Example 6**

A biodegradable laminated film was prepared in the same manner as in Example 3, except that the fine particles were not fed in step (2) (step (1) was not carried out) and that nanocellulose having an average diameter and average length as shown in Table 1 below was used in step (3).

**[Test Example]**

**Test Example 1: Average particle size and particle size deviation**

The coating compositions prepared in Examples 1 to 5 and Comparative Examples 4 to 6 were each subjected to measurement of average particle size and particle size deviation through dynamic light scattering (DLS) at a temperature of 25°C and a measurement angle of 175° using Zetasizer Nano ZS (manufacturer: Marven). Here, the value at the peak derived through the polydispersity index (PDI) at a confidence interval of 0.5 was measured as the particle size (measured 5 times to calculate an average particle size), and the particle size deviation was calculated through the maximum and minimum values obtained by scanning 15 times.

**Test Example 2: Rate of change in light transmittance**

The coating compositions prepared in Examples 1 to 5 and Comparative Examples 4 to 6 were each subjected to the measurement for the rate of change in light transmittance for 12 hours at a temperature of 30°C and a wavelength of 850 nm using Terviscan (Manufacturer: Formulaction).

The rate of change in light transmittance was calculated according to the following Equation 1. Here, the light transmittance was measured for the upper portion of the container in which the coating composition was contained. The upper portion refers to a portion from the top to a position that is 1/3 of the total height of the container in which the coating composition was contained.

[Equation 1]

$$Rate\ of\ change\ in\ light\ transmittance\ (\%) = \frac{|LT1 - LT2|}{LT1} \times 100$$

In Equation 1, LT1 is a first light transmittance (%) of the coating composition when measured under the conditions of a temperature of 30°C and a wavelength of 850 nm, and LT2 is a second light transmittance (%) measured after 12 hours under the same conditions.

**Test Example 3: Presence of precipitation**

The coating compositions prepared in Examples 1 to 5 and Comparative Examples 4 to 6 were each left at room temperature for 12 hours, and whether phase separation or precipitation took place was observed by the naked eye.

**Test Example 4: Tensile strength**

The biodegradable laminated films prepared in Examples 1 to 5 and Comparative Examples 1 to 6 were each cut to prepare a specimen in accordance with ASTM D638 V-type. The tensile strength ($kgf/mm^2$ = 9.8 MPa) was measured using INSTRON's universal testing machine (UTM, model name 4206-001) at a tensile speed of 100 mm/minute and calculated by the program built in the equipment.

**Test Example 5: Tear strength**

The biodegradable laminated films prepared in Examples 1 to 5 and Comparative Examples 1 to 6 were each cut to prepare a specimen in accordance with KSM 6518-B, and a 2-mm notch was made in its center. The tear strength was then measured using INSTRON's universal testing machine (UTM, model name 4206-001) and calculated according to the following Equation A.

[Equation A]

$$\text{Tear strength (N/cm)} = (\text{force applied at the time of tearing (N)})/(\text{thickness of a specimen (cm)})$$

**Test Example 7: Oxygen permeability**

The biodegradable laminated films prepared in Examples 1 to 5 and Comparative Examples 1 to 6 were each measured for oxygen permeability 5 times with a permeability area of 50 $cm^2$ at a temperature of $23 \pm 2°C$ and a pressure of 760 mmHg using a permeability meter (OX-TRAM 2/21, manufacturer: MOCON) according to the measurement method of ASTM D3985 to calculate an average value thereof.

**Test Example 7: Moisture permeability**

The biodegradable laminated films prepared in Examples 1 to 5 and Comparative Examples 1 to 6 were each measured for moisture permeability 5 times with a volumetric flow rate of 9.92 $m^3$/minute and a permeability area of 50 $cm^2$ at a temperature of $23 \pm 2°C$ and an R.H. of 85% using a permeability meter (PERMATRAN W 3/33 MA, manufacturer: MOCON) according to the measurement method of F1249 to calculate an average value thereof.

**Test Example 8: Biodegradability**

The biodegradable laminated films prepared in Examples 1 to 5 and Comparative Examples 1 to 6 were each measured for biodegradability by measuring the amount of carbon dioxide generated according to KS M3100-1. Specifically, an inoculum container having compost only manufactured in a compost factory was prepared. A test container in which a film in 5% by weight of the dry weight of the compost had been added was prepared. Thereafter, they were cultivated for 180 days under the conditions of a temperature of $58 \pm 2°C$, a moisture content of 50%, and an oxygen concentration of 6% or more. Carbon dioxide generated in each container was collected and titrated with an aqueous solution of phenolphthalein to measure the amount of carbon dioxide generated. The biodegradability was calculated from the measured amount of generated carbon dioxide according to the following Equation B.

[Equation B]

Biodegradability (%) = {(amount of $CO_2$ generated in a test container) – (amount of $CO_2$ generated in an inoculum container) × 100/(theoretical amount of $CO_2$ generated in a test container)

[Table 1]

| | | | Ex. 1 | Ex. 2 | Ex. 3 | Ex. 4 | Ex. 5 |
|---|---|---|---|---|---|---|---|
| Base layer | Resin | Diol | PLA | 1,4-BDO | 1,4-BDO | 1,4-BDO | 1,4-BDO |
| | | (% by mole) | | (100) | (100) | (100) | (100) |
| | | Dicarboxylic acid (% by mole) | | DMT (50) AA (50) | DMT (50) AA (50) | DMT (50) AA (50) | DMT (50) AA (50) |
| | | Content of FP | 0.1% by weight | 0.2% by weight | 0.2% by weight | - | 0.3% by weight |
| | | Pretreatment of FP | ○ | ○ | ○ | - | ○ |
| | | Avg. diameter of FP | 10 nm | 10 nm | 50 nm | - | 50 nm |
| | | Avg. length of FP | 150 nm | 150 nm | 200 nm | - | 200 nm |
| | | Thickness | 50 μm | 50 μm | 50 μm | 50 μm | 50 μm |
| Presence of a barrier layer | | | ○ | ○ | ○ | ○ | ○ |
| Barrier layer | Coating composition | Content of NC | 1% by weight | 2% by weight | 4% by weight | 4% by weight | 2% by weight |
| | | Avg. diameter of NC | 100 nm | 50 nm | 100 nm | 100 nm | 100 nm |
| | | Avg. length of NC | 5 μm | 3 μm | 5 μm | 5 μm | 0.2 μm |
| | | Pretreatment | ○ | ○ | ○ | ○ | ○ |
| | | Avg. particle size (nm) | 2,550 | 1,525 | 2,550 | 2,550 | 150 |
| | | Particle size deviation (%) | 10 | 10 | 10 | 10 | 25 |
| | | Rate of change in light transmittance (%) | 22 | 10 | 9 | 9 | 29 |
| | | Presence of precipitation | × | × | × | × | × |
| | | Thickness | 2 μm | 2.5 μm | 2 μm | 2 μm | 1 μm |
| Tensile strength (MPa) | | | 48 | 45 | 48 | 33 | 42 |
| Tear strength (N/cm) | | | 350 | 700 | 790 | 600 | 710 |
| Oxygen permeability (cc/m$^2$·day·atm) | | | 35 | 25 | 18 | 35 | 65 |
| Moisture permeability (g/m$^2$·day) | | | 90 | 82 | 71 | 85 | 99 |
| Biodegradability (%) | | | 90 | 91 | 92 | 90 | 90 |

[Table 2]

| | | | C. Ex. 1 | C. Ex. 2 | C. Ex. 3 | C. Ex. 4 | C. Ex. 5 | C. Ex. 6 |
|---|---|---|---|---|---|---|---|---|
| Base layer | Resin | Diol (% by mole) | 1,4-BDO (100) | 1,4-BDO (100) | 1,4-BDO (100) | 1,4-BDO (100) | 1,4-BDO (100) | 1,4-BDO (100) |
| | | Dicarboxylic acid (% by mole) | DMT (45) AA (55) | DMT (55) AA (45) | DMT (50) AA (50) | DMT (50) AA (50) | DMT (50) AA (50) | DMT (50) AA (50) |
| | Content of FP | | 0.2% by weight | - | - | 0.2% by weight | - | - |
| | Pretreatment of FP | | ○ | - | - | ○ | - | - |
| | Avg. diameter of FP | | 100 nm | - | - | 50 nm | - | - |
| | Avg. length of FP | | 1 μm | - | - | 200 nm | - | - |
| | Thickness | | 50 μm | 50 μm | 50 μm | 50 μm | 50 μm | 50 μm |
| Presence of a barrier layer | | | × | × | ○ | ○ | ○ | ○ |
| Barrier layer | Coating composition | Content of NC | - | - | PVDC | 4% by weight | 4% by weight | 4% by weight |
| | | Avg. diameter of NC | - | - | | 100 nm | 100 nm | 100 nm |
| | | Avg. length of NC | - | - | | 5 μm | 5 μm | 20 μm |
| | | Pretreatment | - | - | × | × | × | ○ |
| | | Avg. particle size (nm) | - | - | - | 2,550 | 2,550 | 10,050 |
| | | Particle size deviation (%) | - | - | - | 60 | 60 | 38 |
| | | Rate of change in light transmittance (%) | - | - | - | 47 | 47 | 60 |
| | | Presence of precipitation | - | - | - | ○ | ○ | ○ |
| | Thickness | | - | - | 4 μm | 2 μm | 2 μm | 2 μm |
| Tensile strength (MPa) | | | 40 | 33 | 33 | 44 | 33 | 33 |
| Tear strength (N/cm) | | | 550 | 430 | 600 | 680 | 570 | 560 |
| Oxygen permeability (cc/m$^2$·day·atm) | | | 850 | 1,350 | 138 | 200 | 285 | 880 |
| Moisture permeability (g/m$^2$·day) | | | 240 | 310 | 201 | 220 | 245 | 270 |
| Biodegradability (%) | | | 90 | 90 | 85 | 91 | 92 | 91 |

As can be seen from Tables 1 and 2, the biodegradable laminated films of Examples 1 to 5 showed excellent results in biodegradability, tensile strength, tear strength, oxygen permeability, and moisture permeability as compared with Comparative Examples 1 to 6.

Specifically, as the biodegradable laminated films of Examples 1 to 5 each comprised a barrier layer formed from a coating composition containing nanocellulose, it had excellent barrier properties, particularly, oxygen permeability and moisture permeability, while biodegradability, tensile strength, and tear strength were not deteriorated. More specifically, as the barrier layer was formed from a coating composition having excellent average particle size, particle size deviation, rate of change in light transmittance, and dispersibility, barrier properties such as oxygen permeability and moisture permeability could be enhanced without deteriorating such mechanical properties as tensile strength and tear strength.

In contrast, although the films of Comparative Examples 1 to 6 were not significantly decreased in tensile strength and tear strength, they had very low barrier properties due to poor oxygen permeability and poor moisture permeability. In particular, the film of Comparative Example 3 comprising a barrier layer formed from PVDC, which was commonly used in the prior art, had poor oxygen permeability and poor moisture permeability as compared with the biodegradable laminated films of Examples 1 to 6. Since PVDC has low coating adhesion, the interface between the base layer and the barrier layer was prone to be lifted, indicating very poor barrier properties.

**Claims**

1. A biodegradable laminated film, which comprises a base layer formed from a biodegradable resin composition; and a barrier layer located on at least one side of the base layer and formed from a coating composition, wherein the coating composition comprises nanocellulose.

2. The biodegradable laminated film of claim 1, wherein the nanocellulose is at least one selected from the group consisting of cellulose nanocrystals (CNC), cellulose nanofibers (CNF), and microfibrillated cellulose (MFC),

   the nanocellulose has an average diameter of 1 $\mu$m or less and an average length of 0.1 $\mu$m or more, and
   the nanocellulose is employed in an amount of 0.05% by weight to 10% by weight based on the total weight of the coating composition.

3. The biodegradable laminated film of claim 1, wherein the coating composition is pretreated by at least one method selected from the group consisting of ultrasonic pretreatment, agitation pretreatment, and hydrophobic pretreatment.

4. The biodegradable laminated film of claim 1, wherein the coating composition has an average particle size of 100 nm or more and a particle size deviation of 30% or less, and

   the coating composition has a rate of change in light transmittance of less than 30% according to the following Equation 1:

   [Equation 1]

   $$Rate\ of\ change\ in\ light\ transmittance\ (\%) = \frac{|LT1 - LT2|}{LT1} \times 100$$

   in Equation 1, LT1 is a first light transmittance (%) of the coating composition when measured under the conditions of a temperature of 30 °C and a wavelength of 850 nm, and LT2 is a second light transmittance (%) measured after 12 hours under the same conditions.

5. The biodegradable laminated film of claim 1, wherein the biodegradable resin composition comprises at least one resin selected from the group consisting of polylactic acid (PLA), polybutylene adipate terephthalate (PBAT), polybutylene succinate (PBS), polybutylene succinate terephthalate (PBST), polybutylene succinate adipate (PBSA), polybutylene adipate (PBA), and polycaprolactone (PCL).

6. The biodegradable laminated film of claim 1, wherein the biodegradable resin composition comprises fine particles having an average length of less than 0.1 $\mu$m, and
   the fine particles are employed in an amount of 0.01% by weight to 3% by weight based on the total weight of the biodegradable resin composition.

7. The biodegradable laminated film of claim 1, which has a biodegradability of 90% or more according to KS M3100-1,

   a tensile strength of 30 MPa or more,
   a tear strength of 300 N/cm to 1,000 N/cm,
   an oxygen permeability of 130 cc/m$^2$·day·atm or less, and
   a moisture permeability of 200 cc/m$^2$·day·atm or less.

8. A process for preparing a biodegradable laminated film, which comprises preparing a base layer from a biodegradable resin composition; and forming a barrier layer from a coating composition on at least one side of the base layer, wherein the coating composition comprises nanocellulose.

9. The process for preparing a biodegradable laminated film of claim 8, wherein the step of preparing a base layer comprises:

subjecting a biodegradable resin composition comprising a diol component and a dicarboxylic acid component to an esterification reaction to prepare a prepolymer; and
subjecting the prepolymer to a polycondensation reaction to prepare a polymer.

10. The process for preparing a biodegradable laminated film of claim 9, wherein the step of preparing a prepolymer comprises:

subjecting the diol component and a first dicarboxylic acid to a first esterification reaction at 190 °C to 260 °C ;
adding the diol component and a second dicarboxylic acid to the first esterification reaction product and subjecting them to a second esterification reaction at 160 °C to 240 °C ;
wherein the first dicarboxylic acid is one or more selected from the group consisting of terephthalic acid, dimethyl terephthalic acid, and derivatives thereof, and
the second dicarboxylic acid is one or more selected from the group consisting of adipic acid, succinic acid, and derivatives thereof.

[Fig. 1]

1

- 200
- 100

[Fig. 2]

1

- 200
- 100
- 200

## INTERNATIONAL SEARCH REPORT

International application No.

**PCT/KR2021/008553**

### A. CLASSIFICATION OF SUBJECT MATTER

**C08J 7/048**(2020.01)i; **C08J 5/18**(2006.01)i; **C08L 67/02**(2006.01)i; **C08L 67/04**(2006.01)i; **C08L 1/02**(2006.01)i; **B29C 48/08**(2019.01)i

According to International Patent Classification (IPC) or to both national classification and IPC

### B. FIELDS SEARCHED

Minimum documentation searched (classification system followed by classification symbols)

C08J 7/048(2020.01); B05D 7/24(2006.01); B32B 23/02(2006.01); B32B 23/04(2006.01); B32B 23/06(2006.01); B32B 5/02(2006.01); B32B 9/02(2006.01); C08G 63/16(2006.01); C08G 63/78(2006.01); C08J 7/04(2006.01); C09D 101/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 나노셀룰로오스(nanocellulose), 생분해성(biodegradable), 다층(multilayer), 코팅(coating), 기체 차단성(gas barrier)

### C. DOCUMENTS CONSIDERED TO BE RELEVANT

| Category* | Citation of document, with indication, where appropriate, of the relevant passages | Relevant to claim No. |
|---|---|---|
| X | WO 2019-229759 A1 (MELODEA LTD.) 05 December 2019 (2019-12-05)<br>See claims 1-29; and pages 5-30. | 1,2,5-8 |
| Y |  | 3,4,9,10 |
| Y | JP 2010-167411 A (KAO CORP.) 05 August 2010 (2010-08-05)<br>See claims 1-2; paragraphs [0027]-[0078]; and table 3. | 3,4 |
| Y | KR 10-1255826 B1 (GIO-SOLTECH. CO., LTD.) 17 April 2013 (2013-04-17)<br>See claims 1-5; and example 1. | 9,10 |
| X | KR 20-2019-0003036 U (MELODEA LTD.) 10 December 2019 (2019-12-10)<br>See claims 1-10; and paragraphs [0024]-[0068]. | 1,2,5-8 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **30 November 2021** | **30 November 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/008553**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0092876 A (YOULCHON CHEMICAL CO., LTD.) 08 August 2019 (2019-08-08) See entire document. | 1-10 |

Form PCT/ISA/210 (second sheet) (July 2019)

**INTERNATIONAL SEARCH REPORT**
Information on patent family members

International application No.

**PCT/KR2021/008553**

| Patent document cited in search report | | | Publication date (day/month/year) | Patent family member(s) | | | Publication date (day/month/year) |
|---|---|---|---|---|---|---|---|
| WO | 2019-229759 | A1 | 05 December 2019 | CN | 112236299 | A | 15 January 2021 |
| | | | | EP | 3802108 | A1 | 14 April 2021 |
| | | | | JP | 2021-525662 | A | 27 September 2021 |
| | | | | KR | 10-2021-0018856 | A | 18 February 2021 |
| | | | | US | 2021-0206150 | A1 | 08 July 2021 |
| JP | 2010-167411 | A | 05 August 2010 | CN | 102264821 | A | 30 November 2011 |
| | | | | EP | 2371892 | A1 | 05 October 2011 |
| | | | | EP | 2371892 | A4 | 31 July 2013 |
| | | | | JP | 2010-168572 | A | 05 August 2010 |
| | | | | JP | 5064479 | B2 | 31 October 2012 |
| | | | | US | 2011-0281487 | A1 | 17 November 2011 |
| | | | | WO | 2010-074340 | A1 | 01 July 2010 |
| KR | 10-1255826 | B1 | 17 April 2013 | KR | 10-2013-0008820 | A | 23 January 2013 |
| KR | 20-2019-0003036 | U | 10 December 2019 | None | | | |
| KR | 10-2019-0092876 | A | 08 August 2019 | None | | | |

Form PCT/ISA/210 (patent family annex) (July 2019)

**EP 4 245 799 A1**

**Patent documents cited in the description**

- KR 20120103158